# EUROPEAN PATENT SPECIFICATION

(11) **EP 4 204 709 B1**
(45) Date of publication and mention of the grant of the patent: **30.10.2024**
(21) Application number: 21916652.7
(22) Date of filing: 19.03.2021
(51) Int. Cl.: F16F 9/00, B29D 22/02, B26D 1/00, B26D 3/00, B26D 5/00, B65H 35/00, B26F 1/38, B65H 20/16, F16F 9/05, B65H 20/06

(54) **AUTOMATIC APPAREL MACHINE**
AUTOMATISCHE BEKLEIDUNGSMASCHINE
MACHINE DE CONFECTION AUTOMATIQUE

(43) Date of publication of application: 05.07.2023
(73) Proprietor: Vibracoustic CV Air Springs Otomotiv Sanayi ve Ticaret Anonim Sirketi, 16600 Gemlik Bursa (TR)
(72) Inventor: BIÇER, Ümit, Osmangazi/Bursa (TR)
(74) Representative: Yamankaradeniz, Kemal
(86) International application number: PCT/TR2021/050248
(87) International publication number: WO 2022/197260

(56) References cited:
- EP-A2- 2 415 589
- CN-U- 206 874 732
- US-A- 3 061 499
- US-A1- 2012 183 707
- US-A1- 2012 273 604
- US-A1- 2017 283 210

## Description

### Field of the Invention

The present invention relates to an automatic apparel machine used in the manufacture of air suspension springs.

The present invention particularly relates to an automatic apparel machine that makes the raw material preparation process automatically by means of defined formulas, comprises 2 stands that move independently from each other instead of a belt system, wherein the positions of the raw materials located on these stands are controlled by a camera and the rotation of the mandrel is driven by a servo motor.

### State of the Art

The rubber air suspension systems for commercial and personal vehicles are increasingly used as spring damping components. The air suspension bellows consists of four layers as the following: inner rubber, first cord fabric, second cord fabric and outer rubber. Inner rubber and outer rubber have the same formula; however the only difference between them is their thickness. The semifinished product is baked at a certain temperature, pressure and duration in the vulcanization press and its final form is given after the apparel process is completed. Machines that are called apparel machines or rubber wrapping machines are used for the apparel process.

During the production of the air suspension springs, the raw material is prepared manually by the operator. The operator shall cut the raw material to be used in production with the right length and at right angles manually. Afterwards, the raw materials used in the membrane production are positioned on the belt of the machine. Laser marking is performed so as to place the raw material in the correct position on the belt. After all materials are positioned, the process is initiated by the operator. The raw materials are wound sequentially on the rotating mandrel at the end of the moving belt. The operator starts the raw material preparation process required for the next step, during this winding process.

Slipping may occur in the moving belt on which the raw material is left in the machines currently used today. In case the belt slide to the right or left, the machine breaks down. Terminating the production until the breakdown is eliminated and the position of the belt is corrected causes labor loss. If the right or left sliding failure of the belt is not eliminated, deviation up to 2 degrees can occur in the final product winding angles. This problem may also cause emulgences in the technical characteristics of the finished product. On the other hand, the production duration increases and the production volume decrease, since the operator waits for the end of the winding operation so as to position a new product in the current machines. The waste ratio in the final product increases since its position is not controlled again after the product is positioned on the belt. Since the rotation drive of the mandrel in said machines is provided by friction to the moving belt system under the same, it may cause damage to the product to be wound by crumpling the same by the mandrel.

As a result, the requirement for a new automatic garment machine which eliminates the abovementioned problems and the insufficiency of the current solutions makes it necessary to make a development in the relevant technical field.

US 2012/273604 A1 discloses an automatic apparel machine used in the manufacture of air suspension springs according to the preamble of claim 1.

### Brief Description of the Invention

The present invention relates to an automatic garment machine used in the manufacture of air suspension springs which fulfills the abovementioned requirements, eliminates all disadvantages and brings some additional advantages.

The aim of the invention starting out from the state of the art is to eliminate the failures in product dimensions and to prevent inefficiencies due to the operator by making the preparation of raw materials by defined formulas automatically in the developed apparel machine.

The aim of the invention is to reduce control of the material sequences and positions and the operator competence required for production by means of the camera used in the apparel machine.

Another aim of the invention is to include the operating time of the operator in the operating time of the machine and to increase the production amount per unit time by allowing the operator to place the next raw material on the empty stand while the winding process continues, by means of at least two stands independent from each other used instead of the belt system in the apparel machine.

Another aim of the invention is to prevent false positioning the raw materials placed on the stand by controlling the positions of the same with the camera.

Another aim of the invention is to eliminate the angle difference problem that occur due to the sliding of the band to the right or left in existing applications and to standardize the final product by means of the rail system on which the stands operate.

Another aim of the invention is to prevent the weaving that may occur during product winding by means of rotating the mandrel with a servo motor in the apparel machine.

Another aim of the invention is to reduce the problem of presence of air between the layers by means of the pressure formed between the mandrel and the belt in the apparel machine.

Another aim of the invention is to facilitate the winding of the products by means of the heater located in the winding mandrel.

Another aim of the invention is to facilitate the removal of rubber from the mandrel by means of the air connection that is added in the winding mandrel and provides to blow air after the winding process is completed.

The structural and characteristic features of the present invention will be understood clearly by the following drawings and the detailed description made with reference to these drawings and therefore the evaluation shall be made by taking these figures and the detailed description into consideration.

### Brief Description of Drawings

In order to understand the advantages of the present invention with its structure and additional elements, it shall be evaluated with the following defined figures.
Figure-1 is a schematic general view of the apparel machine,
Figure-2 is a schematic general view of the apparel machine from a different angle,
Figure-3 is a schematic general view of the moving winding mandrel mounted on the apparel machine,
Figure-4 is a schematic general view of the movable table mounted on the apparel machine,
Figure-5 is a schematic general view of the automatic cutting table mounted on the apparel machine,
Figure-6 is a top schematic general view of the apparel machine.

### Reference Numbers

10. Apparel machine
11. Movable table
12. Camera
13. Automatic rubber cutting bench
14. Movable winding mandrel
15. Automatic cutting bench grippers
16. Alignment lasers
17. Rail system

### Detailed Description of the Invention

In this detailed description, the inventive an automatic apparel machine (10) used in the manufacture of air suspension springs is described only for clarifying the subject matter in a manner such that no limiting effect is created.

The angle and length settings have been defined on the system in the apparel machine (10) shown in Figure-1, and the raw material preparation process is performed automatically by means of defined formulas so as to eliminate failures in the product dimensions. There are two movable tables (11) that move independently from each other, allow the operator to position raw materials on the next moving table (11) while the winding process continues, instead of the belt system used in the existing applications in said apparel machine (10). The amount of product produced per unit time is increased and the operator working time is included in the operating time of the machine by means of these movable tables (11). The positions of the raw materials located in said movable tables (11) are controlled by means of a camera (12). Another characteristic of said apparel machine (10) is that; the rotation drive of a movable winding mandrel (14) is performed by means of a servo motor so as to prevent crumpling that occur during product winding. The inventive automatic apparel machine (10) mainly comprises the following; two movable tables (11) that move independently from each other on a rail system (17) and where the raw material is placed; the movable winding mandrel (14) moving up-down and forward-backward on the movable table (11) by means of servo motor; automatic cutting bench grippers (15) that is positioned on an automatic rubber cutting bench (13) perpendicular to the axis of the movable tables (11) in the section where the movable winding mandrel (14) is located so as to adjust the lengths of the cut raw material; the automatic rubber cutting bench (13) that cuts the raw material in the direction of the length and angles required for the finished product recorded in the system.

At the entrance of the apparel machine (10) shown in Figure-2, two movable tables (11) that move independently from each other on the rail system (17) and where the raw material is placed are positioned. The rail system (17) located at the lower section of the movable table (11) moves the movable table (11). There is a camera (12) that controls the position of the raw material placed on the movable table (11) on the upper section of said movable tables (11). The movable winding mandrel (14) that is located at the end section of said movable table (11) and is shown in Figure-3, moves up-down and forward-backward on the movable table (11) by means of a servo motor. A heater is placed in said movable winding mandrel (14) so as to facilitate winding of the products and an air connection where air is blown after the winding process is completed so as to facilitate removing the rubber from the movable winding mandrel (14) is made. An alignment laser (16) that is positioned on the same plane with the camera (12) shown in Figure-4 and on the upper section of the movable table (11), shows the positions for each process step separately by positioning the raw material located on the movable table (11). The automatic cutting bench grippers (15) that are shown in Figure-5 are positioned on the automatic rubber cutting bench (13) such that they are perpendicular to the axis of the movable tables (11) in the section where the movable winding mandrel (14) is located. Said automatic cutting bench grippers (15) enable the adjustment of the lengths of the cut raw material. Said automatic rubber cutting bench (13) cuts the raw material at the right dimensions and angles on the formula entered by means of the servo motor and blades added thereon.

The lengths and angles of the raw material (production adjustment formulas) required for the finished product are saved in the apparel machine (10) system that is shown in Figure-6. The determined dimensions are cut automatically by means of a blade on the automatic rubber cutting bench (13). The automatic cutting bench grippers (15) enable to adjust length and prepare the raw material and the raw material is made ready for the winding process. The cut raw material is taken respectively by the operator and placed on the moving table (11) in the proper position. When positioning is performed on the movable table (11), the positions shown separately for each operation by the alignment lasers (16) are considered. After the raw material is positioned in the correct position, the start button is pressed to continue the process. Meanwhile, the position control of the raw material located with the camera (12) is carried out. If the position is wrong, the apparel machine (10) does not operate and gives a warning, if it is correct, the process continues. While the movable table (11) that has the raw material thereon moves towards the front side on the rail system (17) for the winding process, the other empty movable table (11) returns to the front of the operator. Meanwhile, the operator takes the next cut raw material from the automatic rubber cutting bench (13). In case the movable table (11) which does not have raw material thereon comes in front of the operator, the operator repeats the steps of the former movable table (11). In case the movable table (11) on which the raw material is located comes to the front part for the winding process, the movable winding mandrel (14) comes to the appropriate position on the movable table (11). The movable table (11) and the movable winding mandrel (14) are positioned relative to each other on the vertical axis. The movable mandrel (14) rotates and moves forwardly and the raw material is wound on the winding mandrel (14) from the movable table (11). After the operator gives approval by placing the raw material on the movable table (11) without raw material on it, the movable tables (11) change position and the winding process is repeated. The wound membrane on the winding mandrel (14) is removed after the raw material layers that constitute the final product are completed.

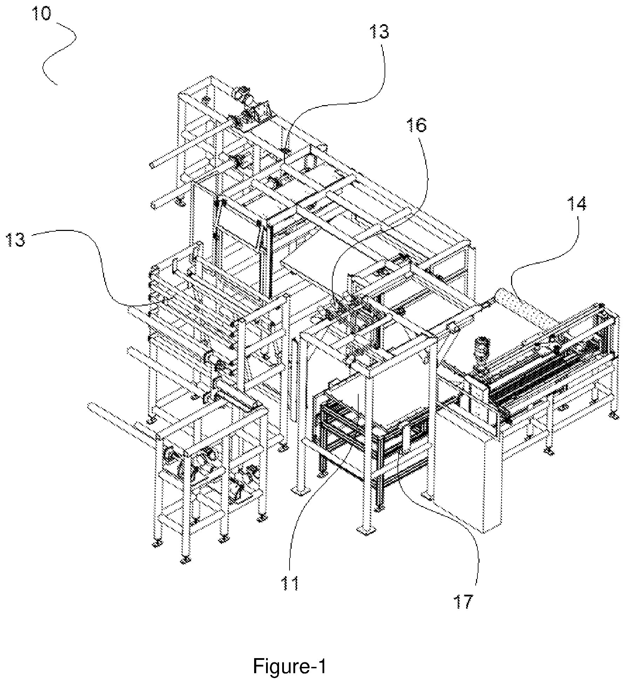

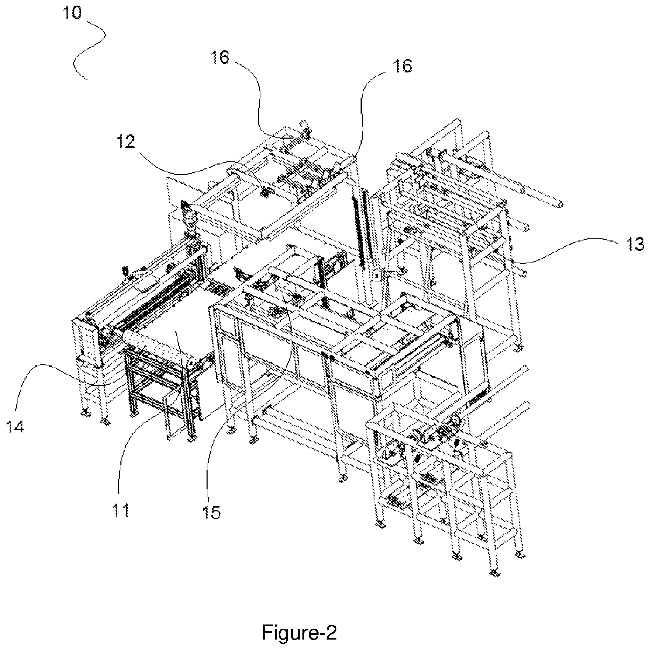

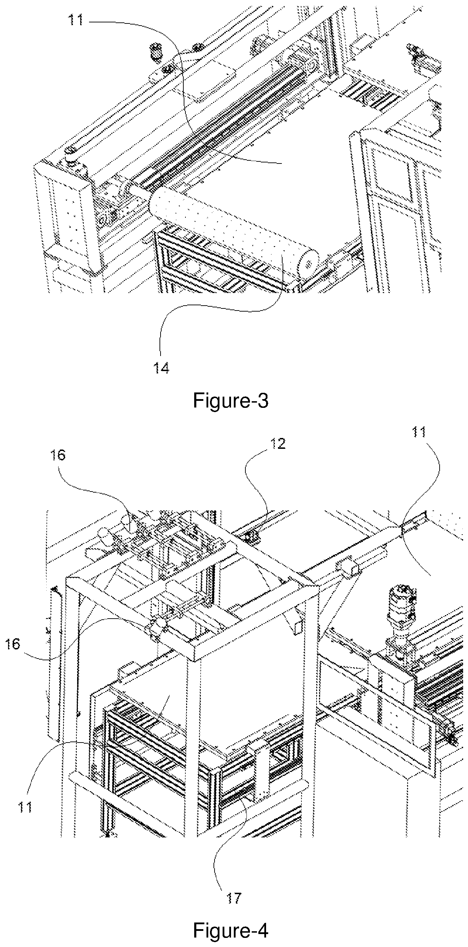

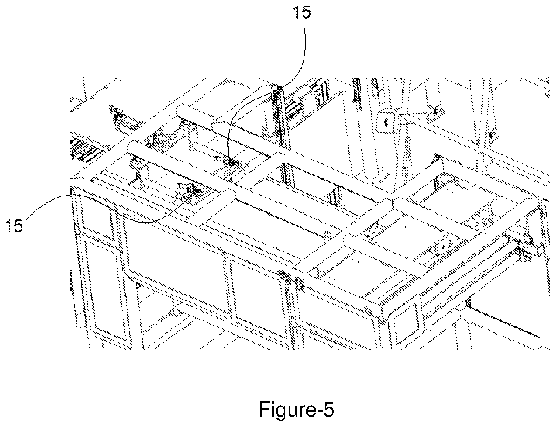

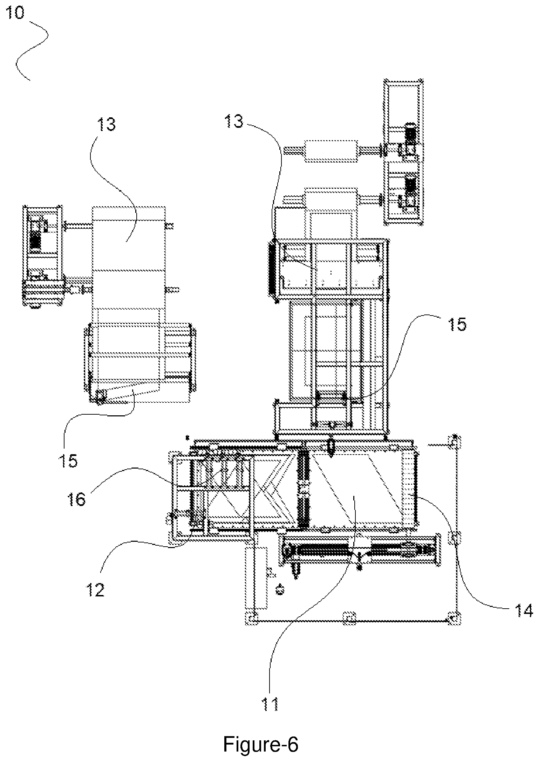

## Claims

1. An automatic apparel machine (10) used in the manufacture of air suspension springs,
**characterized by comprising;**
- two movable tables (11) that move independently from each other on a rail system (17) and where the raw material is placed;
- a movable winding mandrel (14) moving up-down and forward-backward on a movable table (11) by means of servo motor;
- automatic cutting bench grippers (15) that are positioned on an automatic rubber cutting bench (13) perpendicular to the axis of the movable tables (11) in the section where the moving winding mandrel (14) is located so as to adjust the lengths of the cut raw material;
- the automatic rubber cutting bench (13) that cuts the raw material in the direction of the length and angles required for the finished product saved in the system.

2. Apparel machine (10) according to claim 1, **characterized by comprising;** the rail system (17) that is located at the lower section so as to move the movable table (11).

3. Apparel machine (10) according to claim 1, **characterized by comprising;** a camera (12) that is positioned on the upper section of the movable tables (11) so as to control the position of the raw material placed on the movable table (11).

4. Apparel machine (10) according to claim 1, **characterized by comprising;** an alignment laser (16) that shows the positions for each process step separately by positioning the raw material located on the movable table (11), is positioned on the same plane with the camera (12) and on the upper part of the movable table (11).

5. Apparel machine (10) according to claim 1, **characterized by comprising;** servo motors and blades that are positioned on the automatic rubber cutting bench (13) so as to cut the raw material at the right dimensions and angles on the formula entered.

6. Apparel machine (10) according to claim 1, **characterized by comprising;** servo motor that provided the rotation drive of the movable winding mandrel (14) so as to prevent crumpling that occur during product winding.

7. Apparel machine (10) according to claim 1, **characterized by comprising;** a heater located inside the movable winding mandrel (14) so as to facilitate the winding of the products.

8. Apparel machine (10) according to claim 1, **characterized by comprising;** an air connection where air is blown after the winding process is completed so as to facilitate removing the rubber from the movable winding mandrel (14) and made into the movable winding mandrel (14).

## Patentansprüche

1. Automatische Bekleidungsmaschine (10), die bei der Herstellung von Luftlagerungsfedern verwendet wird,
**dadurch gekennzeichnet, dass sie Folgendes umfasst;**
- zwei bewegliche Tische (11), die sich unabhängig voneinander auf einem Schienensystem (17) bewegen und auf denen das Rohmaterial platziert wird,
- einen beweglichen Wickeldorn (14), der sich mittels eines Servomotors auf einem beweglichen Tisch (11) auf und ab sowie vor und zurück bewegt;
- automatische Schneidbankgreifer (15), die auf einer automatischen Gummischneidebank (13) senkrecht zu der Achse der beweglichen Tische (11) in dem Abschnitt positioniert sind, in dem sich der bewegliche Wickeldorn (14) befindet, um die Längen des geschnittenen Rohmaterials einzustellen;
- die automatische Gummischneidebank (13), die das Rohmaterial in der im System gespeicherten Richtung der Länge und in den Winkeln schneidet, die für das fertige Produkt erforderlich sind.

2. Bekleidungsmaschine (10) nach Anspruch 1, **dadurch gekennzeichnet, dass sie Folgendes umfasst;** das Schienensystem (17), das sich in dem unteren Abschnitt befindet, um den beweglichen Tisch (11) zu bewegen.

3. Bekleidungsmaschine (10) nach Anspruch 1, **dadurch gekennzeichnet, dass sie Folgendes umfasst;** eine Kamera (12), die an dem oberen Abschnitt der beweglichen Tische (11) positioniert ist, um die Position des auf dem beweglichen Tisch (11) platzierten Rohmaterials zu kontrollieren.

4. Bekleidungsmaschine (10) nach Anspruch 1, **dadurch gekennzeichnet, dass sie Folgendes umfasst;** einen Ausrichtungslaser (16), der durch Positionieren des auf dem beweglichen Tisch (11) befindlichen Rohmaterials die Positionen für jeden Prozessschritt separat zeigt und der auf der gleichen Ebene wie die Kamera (12) und auf dem oberen Teil des beweglichen Tisches (11) positioniert ist.

5. Bekleidungsmaschine (10) nach Anspruch 1, **dadurch gekennzeichnet, dass sie Folgendes umfasst;** Servomotoren und Klingen, die auf der automatischen Gummischneidebank (13) positioniert sind, um das Rohmaterial gemäß der eingegebenen Formel in den richtigen Abmessungen und Winkeln zu schneiden.

6. Bekleidungsmaschine (10) nach Anspruch 1, **dadurch gekennzeichnet, dass sie Folgendes umfasst;** einen Servomotor, der den Drehantrieb des beweglichen Wickeldorns (14) bereitstellt, um ein Zerknittern zu verhindern, das während des Aufwickelns des Produkts auftritt.

7. Bekleidungsmaschine (10) nach Anspruch 1, **dadurch gekennzeichnet, dass sie Folgendes umfasst;** eine innerhalb des beweglichen Wickeldorns (14) befindliche Heizvorrichtung, um das Aufwickeln der Produkte zu erleichtern.

8. Bekleidungsmaschine (10) nach Anspruch 1, **dadurch gekennzeichnet, dass sie Folgendes umfasst;** einen Luftanschluss, über den nach Abschluss des Wickelprozesses Luft geblasen wird, um das Entfernen des Gummis von dem beweglichen Wickeldorn (14) zu erleichtern, und der in den beweglichen Wickeldorn (14) ausgeführt ist.

## Revendications

1. Machine de confection de vêtements automatique (10) utilisée dans la fabrication de ressorts de suspension pneumatique,
**caractérisée en ce qu'elle comprend :**
- deux tables mobiles (11) qui se déplacent indépendamment l'une de l'autre sur un système de rails (17) et où est placée la matière première ;
- un mandrin d'enroulement mobile (14) se déplaçant de haut en bas et d'avant en arrière sur une table mobile (11) au moyen d'un servomoteur ;
- des éléments de préhension de banc de découpe automatique (15) qui sont positionnés sur un banc de découpe de caoutchouc automatique (13) perpendiculaire à l'axe des tables mobiles (11) dans la section où se trouve le mandrin d'enroulement mobile (14) de manière à ajuster les longueurs de la matière première découpée ;
- le banc de découpe de caoutchouc automatique (13) qui découpe la matière première dans le sens de la longueur et des angles requis pour le produit fini enregistré dans le système.

2. Machine de confection de vêtements (10) selon la revendication 1, **caractérisée en ce qu'elle comprend :** le système de rails (17) qui est situé au niveau de la section inférieure de manière à déplacer la table mobile (11).

3. Machine de confection de vêtements (10) selon la revendication 1, **caractérisée en ce qu'elle comprend :** une caméra (12) qui est positionnée sur la section supérieure des tables mobiles (11) de manière à contrôler la position de la matière première placée sur la table mobile (11).

4. Machine de confection de vêtements (10) selon la revendication 1, **caractérisée en ce qu'elle comprend :** un laser d'alignement (16) qui montre les positions pour chaque étape de processus séparément en positionnant la matière première située sur la table mobile (11), est positionné sur le même plan que la caméra (12) et sur la partie supérieure de la table mobile (11).

5. Machine de confection de vêtements (10) selon la revendication 1, **caractérisée en ce qu'elle comprend :** des servomoteurs et des lames qui sont positionnés sur le banc de découpe de caoutchouc automatique (13) de manière à découper la matière première aux bonnes dimensions et aux bons angles sur la formule saisie.

6. Machine de confection de vêtements (10) selon la revendication 1, **caractérisée en ce qu'elle comprend :** un servomoteur qui assure l'entraînement en rotation du mandrin d'enroulement mobile (14) de manière à empêcher le froissement qui se produit pendant l'enroulement du produit.

7. Machine de confection de vêtements (10) selon la revendication 1, **caractérisée en ce qu'elle comprend :** un élément chauffant situé à l'intérieur du mandrin d'enroulement mobile (14) de manière à faciliter l'enroulement des produits.

8. Machine de confection de vêtements (10) selon la revendication 1, **caractérisée en ce qu'elle comprend :** un raccord d'air dans lequel de l'air est soufflé une fois le processus d'enroulement terminé de manière à faciliter le retrait du caoutchouc du mandrin d'enroulement mobile (14) et sa transformation en mandrin d'enroulement mobile (14).
